Europäisches Patentamt

(19) European Patent Office

Office européen des brevets

(11) Numéro de publication: **0 068 910**
**B1**

(12) **FASCICULE DE BREVET EUROPEEN**

(45) Date de publication du fascicule du brevet:
14.08.85

(21) Numéro de dépôt: **82400779.3**

(22) Date de dépôt: **29.04.82**

(51) Int. Cl.⁴: **G 01 N 21/76**

(54) **Procédé et appareil d'analyse directe et continue de traces d'hydrures gazeux.**

(30) Priorité: **25.05.81 FR 8110316**

(43) Date de publication de la demande:
**05.01.83 Bulletin 83/1**

(45) Mention de la délivrance du brevet:
**14.08.85 Bulletin 85/33**

(84) Etats contractants désignés:
**AT BE CH DE FR GB IT LI LU NL SE**

(56) Documents cités:
**EP - A - 0 053 527**
**FR - A - 2 349 138**

**PATENTS ABSTRACTS OF JAPAN, vol. 2, no. 17, 6 décembre 1978, page 10018E77**
**ISA TRANSACTIONS, vol. 16, no. 2, 1977, pages 67-70 G.S. TURNER: "Process industry application of chemiluminescence analyzers"**
**ISA TRANSACTIONS, vol. 15, no. 3, 1976, pages 209-213 G.A. HEYMAN et al.: "Some considerations in determining oxides of nitrogen in stack gases by chemiluminescence analyzer"**

(73) Titulaire: **L'AIR LIQUIDE, SOCIETE ANONYME POUR L'ETUDE ET L'EXPLOITATION DES PROCEDES GEORGES CLAUDE, 75, Quai d'Orsay, F-75321 Paris Cedex 07 (FR)**

(72) Inventeur: **Louise, Jean, 22, Allée des Plantes, F-94800 Villejuif (FR)**
Inventeur: **Boubal, Mireille, Cour des Longprés, F-92100 Boulogne Billancourt (FR)**
Inventeur: **Belot, Dominique, 1, rue du Pavillon, F-78510 Triel-sur-Seine (FR)**
Inventeur: **Politi, Jean-Marie, 10, rue Alfred de Musset, F-77340 Pontault-Combault (FR)**

(74) Mandataire: **Bouton Neuvy, Liliane et al, L'Air liquide, Société Anonyme pour L'Etude et L'Exploitation des Procédés Georges Claude 75, Quai d'Orsay, F-75321 Paris Cedex 07 (FR)**

ACTORUM AG

## Description

La présente invention concerne l'analyse directe et continue de traces d'hydrures gazeux à très basses teneurs selon le préambule de la revendication 1, la détection de chromatographie de traces desdits hydrures selon le préambule de la revendication 2, l'analyse directe continue et sélective d'un de ces hydrures, les applications de ces procédés selon le préambule de la revendication 4 et l'appareil permettant leur mise en œuvre selon le préambule de la revendication 5.

Les hydrures gazeux, notamment le silane, l'arsine, la phosphine et le diborane sont utilisés en quantités croissantes dans l'industrie électronique. Or, l'on sait que ces hydrures gazeux sont extrêmement dangereux par leur toxicité et leur tendance à l'inflammabilité.

Les concentrations maximales admissibles (CMA) dans une atmosphère de travail pour une exposition de 8 h/d et 5 d par semaine sont: $SiH_4$ 0,5 ppm volume, $AsH_3$ 0,05 ppm, $PH_3$ 0,3 ppm et $B_2H_6$ 0,1 ppm volume.

Il s'avère donc tout à fait indispensable de pouvoir disposer d'analyseurs jouant notamment le rôle d'appareils de détection fiables, sensibles, à temps de réponse très court, d'un emploi facile pour surveiller en permanence l'atmosphère des salles où des hydrures sont mis en œuvre.

Depuis environ au moins quinze années on a recherché et proposé diverses méthodes d'analyse et de détection. Parmi les appareils de détection actuellement disponibles pour ces hydrures, on trouve principalement les spectromètres infrarouges, les colorimètres, les détecteurs à photo-ionisation, les détecteurs à semi-conducteurs.

Les spectromètres infrarouges, même les plus élaborés, ne permettent pas de détecter l'arsine au niveau de la concentration maximale admissible, et pour effectuer indifféremment la détection en continu de l'un des quatre hydrures cités, il convient de leur adjoindre un système d'acquisition de données.

Dans la gamme des colorimètres, on trouve les tubes colorimétriques et les colorimètres à bande imprégnée.

Les tubes colorimétriques permettent de détecter avec une bonne fiabilité la concentration maximale admissible de l'arsine, de la phosphine et du diborane, mais ils présentent l'inconvénient de ne pouvoir être couplés à un système de surveillance automatique en continu à déclenchement d'alarme, et il n'existe pas de tube pour le silane.

Les colorimètres à bande imprégnée n'assurent que la détection de l'arsine et de la phosphine, et avec l'obligation d'un changement périodique de la bande réactive imprégnée d'un réactif toxique et un temps de réponse supérieur à 5 min pour la CMA, ce qui est en défaveur de la surveillance automatique en continu et de la sécurité. Car en raison, notamment, de la haute toxicité de l'arsine, l'absence de détection d'une fuite de quelques ppm volume peut en quelques minutes provoquer des lésions irréversibles, ainsi en 30 min une fuite de 10 ppm volume pollue l'atmosphère d'une teneur correspondant à la dose mortelle.

Avec les détecteurs à photo-ionisation en analyse directe, c'est-à-dire en analysant directement l'air ambiant, les sensibilités obtenues ne sont pas suffisantes, de l'ordre de quelques ppm, ce qui les rend inutilisables pour la surveillance de l'atmosphère des locaux d'utilisation des hydrures gazeux. Dans le cas d'une préséparation chromatographique, les détecteurs à photo-ionisation conduisent à une sensibilité en principe meilleure, mais avec un temps de réponse, c'est-à-dire la durée de rétention des produits dans la colonne, devenant très long. Or, en raison de la toxicité très élevée des hydrures gazeux, ce procédé ne peut pas être considéré comme satisfaisant du point de vue de la sécurité, d'autant plus que le transfert des hydrures à très basse teneur dans une colonne de chromatographie est extrêmement délicat, d'où la possibilité de se trouver en présence d'une réponse par défaut, ce qui accroît l'insécurité et le manque de fiabilité.

Dans la classe des détecteurs à semi-conducteurs, les appareils actuellement disponibles sont très sensibles à beaucoup de composés, notamment à des gaz naturellement présents dans l'air, tels l'humidité, l'anhydride carbonique et l'oxyde de carbone, et de ce fait ne présentent pas une spécificité suffisante pour analyser et détecter de très basses teneurs en hydrures toxiques.

En conséquence, on constate que les appareils d'analyse et de détection mis dans le commerce ne répondent que partiellement aux impératifs de sélectivité et sécurité, surtout du fait de la lenteur de leur réponse. Malgré de nombreux travaux poursuivis pendant de longues années, on est toujours à la recherche d'une méthode permettant le dosage de traces d'hydrures à très basses teneurs, en particulier d'arsine, dans des conditions telles qu'elle conduise à la réalisation d'appareils répondant aux critères de sécurité exigée dans les industries de l'électronique et de la métallurgie des nonferreux.

Le phénomène de chimiluminescence dans l'ozone est connu pour divers corps chimiques tels le monoxyde d'azote, les hydrocarbures insaturés, les produits soufrés, et même certains hydrures gazeux. Ce phénomène est déjà utilisé pour la détection de très faibles traces d'oxydes d'azote dans l'atmosphère.

Par la demande européenne de brevet EP-A-53527, publiée le 9 juin 1982, on connaît un procédé d'analyse directe et continue de traces d'arsine à très basses teneurs inférieures à 1 ppm volume dans un gaz vecteur selon lequel lesdites traces sont détectées et dosées par émission chimiluminescente de l'arsine en présence d'ozone.

Mais l'application directe de la technique adaptée au monoxyde d'azote à la détection de certains hydrures gazeux ne conduit pas à des résultats significatifs en raison des interférences entre les émissions des hydrures et celles d'autres gaz.

En effet, la réaction de chimiluminescence du monoxyde d'azote dans l'ozone donne un spectre d'émission continu, de faible intensité lumineuse,

débutant vers 6000 Å (1 Å correspond à 0,1 nm) et dont le maximum se situe dans le proche infrarouge à 12 000 Å.

De même, les hydrocarbures éthyléniques donnent une bande d'émission entre 3000 et 6000 Å, centrée sur 4400 Å.

On a recherché un procédé d'analyse directe et continue de traces d'hydrures gazeux choisi parmi l'arsine, la phosphine, le silane et la diborane seuls ou en mélange à très basses teneurs dans un gaz vecteur par émission chimiluminescente des hydrures gazeux en présence d'ozone limitant au maximum les interférences avec d'autres gaz tels le monoxyde d'azote, les hydrocarbures insaturés et les produits soufrés et permettant la détection d'une plus grande série de gaz dangereux que les appareillages commerciaux utilisés et une détection plus sensible de l'arsine et de la phosphine.

Il a été trouvé un procédé qui pallie les inconvénients des méthodes connues et dont la mise en œuvre du principe permet aux industriels de disposer d'appareils d'analyse et de détection fiables, efficaces, très sensibles, à temps de réponse extrêmement court, d'un emploi simple pour surveiller automatiquement en continu et en analyse directe l'atmosphère des ateliers éventuellement polluée par des traces d'hydrures gazeux en évitant la détection de gaz parasites utilisés dans l'industrie électronique.

Selon le procédé de l'invention les spectres émis par les hydrures gazeux sont filtrés optiquement de façon à transmettre par filtrage optique les signaux de longueurs d'onde comprises entre 495 et 650 nm et en ce que les signaux optiques transmis sont amplifiés par un tube photomultiplicateur dont la courbe de réponse spectrale est adaptée à la zone de longueurs d'onde précitée.

Ce choix de la zone spectrale comprise entre 4950 et 6500 Å a une incidence favorable sur la détection de chacun de ces hydrures gazeux avec une meilleure sensibilité. L'arsine, la phosphine et le silane sont détectés à très basses teneurs voisines de la CMA et le diborane à une teneur de l'ordre de quelques ppm. Avec l'arsine et la phosphine les taux d'interférence peuvent être considérés comme négligeables en raison de leur très bonne sensibilité.

Selon la méthode décrite, on peut suivre en continu de manière non sélective l'évolution de la teneur des quatre hydrures gazeux cités dans une atmosphère. La faible sensibilité vis-à-vis des polluants les plus usuels permet de détecter globalement la présence desdits hydrures gazeux.

On peut aisément réaliser la spécificité de la technique par un procédé de détection de chromatographie de traces desdits hydrures gazeux jusqu'à très basses teneurs selon lequel dans un premier stade lesdits hydrures gazeux sont séparés par chromatographie en phase gazeuse, puis dans un second stade chacun des hydrures est soumis séparément à une émission chimiluminescente en présence d'ozone, le spectre émis étant filtré optiquement de façon à transmettre par filtrage optique les signaux de longueurs d'onde comprises entre 495 et 650 nm, et en ce que les signaux optiques recueillis sont amplifiés par un tube photomultiplicateur dont la courbe de réponse spectrale est adaptée à la zone de longueurs d'ondes précitée.

La mise en œuvre du procédé tel que précédemment décrit permet l'analyse directe continue et sélective d'un hydrure gazeux cité.

L'application de ces procédés selon l'invention est décrite dans la revendication 4.

Le procédé selon l'invention est mis en œuvre dans un appareil selon la revendication 5.

En outre, l'appareil peut comprendre un dispositif d'étalonnage avec un injecteur du mélange étalon arsine dans l'azote, les circuits de l'atmosphère à contrôler et de l'ozone sont munis de rotamètres et de débitmètres assurant le contrôle des débits introduits dans la chambre de réaction, à la sortie de celle-ci un ensemble de filtres optiques est intercalé avant le tube photomultiplicateur logé dans une enceinte refroidie, un tiroir électronique comprenant un amplificateur qui assure les contrôles et les régulations avant la transmission aux contacts à alarme et éventuellement à une imprimante à alarme à plusieurs voies. Ces contacts à alarme sont des détecteurs de défauts qui déclenchent des signaux relayés qui renforcent la sécurité de l'appareil analyseur-détecteur. Ces contacts à alarme préviennent de toutes les éventuelles anomalies de fonctionnement de l'appareil, à savoir un défaut de régulation de température du photomultiplicateur, l'absence de circulation de l'échantillon dans la chambre de réaction, le manque d'ozone, etc.

On procède à l'étalonnage de l'appareil en injectant un mélange étalon d'arsine dont la teneur est de l'ordre de quelques dizaines de ppm dans un système de dilution qui permet d'envoyer dans la chambre de réaction une concentration connue d'arsine voisine de la CMA. On vérifie alors la réponse de l'appareil.

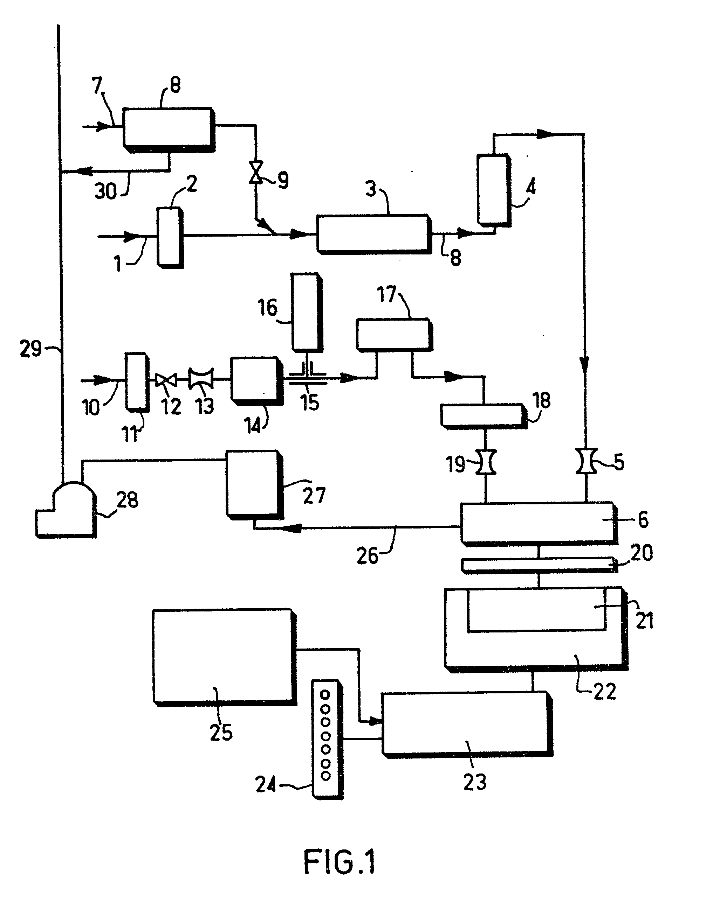

Sur la fig. 1 des dessins annexés représentant l'appareil, on voit que l'air à contrôler, prélevé dans l'atmosphère, est véhiculé par la canalisation 1, traverse un filtre 2 retenant les poussières. Il est introduit dans le débitmètre 3, ensuite dans le rotamètre 4 puis il passe à travers l'injecteur sonique 5 et arrive dans la chambre de réaction 6.

En position étalonnage, le mélange étalon arsine/azote est introduit par la canalisation 7 dans le dilueur étalon 8.

En position mesure, la vanne 9 située sur le circuit 7 arrête le débit du mélange étalon et ne laisse pénétrer dans ladite chambre de réaction 6 que l'air ambiant.

L'oxygène d'alimentation de l'ozone circulant dans la canalisation 10 traverse le filtre 11 destiné à retenir les poussières, la vanne 12, le limiteur de débit 13, le débitmètre 14. En aval du débitmètre, on place un T 15 destiné à assurer un léger débit de fuite d'oxygène contrôlé par le rotamètre 16 permettant à l'oxygène d'arriver à la chambre de réaction à la pression atmosphérique. Après avoir traversé le T, l'oxygène passe dans l'ozoneur 17 puis à travers le filtre 18 et dans l'injecteur sonique 19 avant d'arriver dans la chambre de réaction 6. L'appareil fonctionnant par aspiration et sous dépression, les débits de l'air à analyser et de l'oxygène ozonisé sont contrôlés par les rotamètres et débitmètres avant l'entrée dans la chambre de réaction 6. L'ensemble rotamètre, débitmètre T 14, 15, 16 permet, en cas de défaut d'alimentation en oxygène, d'aspirer par le T l'air ambiant afin d'assurer une continuité dans la distribution de l'oxygène dans l'ozoneur en vue d'éviter sa détérioration.

Le spectre émis pas la chimiluminescence des hydrures gazeux après passage à travers un ensemble de filtres optiques 20 transmettant les longueurs d'onde comprises entre 4950 et 6500 Å est transmis au tube photomultiplicateur 21, situé à l'intérieur de l'enceinte refroidie 22. L'amplificateur 23 reprend le signal en le transmettant aux contacts à alarme 24 et éventuellement à une imprimante à plusieurs voies 25. A titre d'exemple, on peut indiquer un débit de 4 à 6 l/h pour l'oxygène ozonisé, le débit de l'air à contrôler entrant dans la chambre de réaction étant de l'ordre de 75 l/h.

L'air contrôlé quitte en continu la chambre de réaction par la conduite 26 et traverse le filtre à ozone 27 dans lequel s'effectue la destruction de l'ozone, l'air est ensuite repris par la pompe 28 puis évacué par la conduite 29 à laquelle est raccordée la canalisation 30 évacuant l'excès de mélange étalon.

*Tableau I*

*Spectres d'émission captés par le photomultiplicateur*

| Nature du gaz | Limites du spectre enregistré $\lambda$ (Å; 1 Å = 0,1 nm) | Maximum d'émission $\lambda$ (Å) |
|---|---|---|
| $PH_3$ | 3500-7500 | 5500-6000 |
| $B_2H_6$ | 3500-6500 | 4700-5700 |
| $AsH_3$ | 3000-9000 | 4500-5500 |

Les spectres ont été enregistrés par défilement automatique des longueurs d'onde, à 200 ou 500 Å/min, à partir de mélange à 500 ppm dilués dans de l'azote.

Les maxima des spectres d'émission de la réaction chimiluminescente entre les hydrures gazeux: arsine, phosphine, diborane et ozone sont tous situés entre 4500 et 6000 Å. On peut supposer que la zone d'émission du silane se trouve également entre 4500 et 6000 Å par analogie avec la réaction des autres gaz.

Avec l'arsine et la phosphine, les interférences sont négligeables en raison de leur grande sensibilité.

$AsH_3$: 0,05 ppm correspondant à un signal supérieur à 1000 mV.

$PH_3$: 0,03 ppm correspondant à un signal de l'ordre de 1000 mV.

$SiH_4$: 0,05 ppm correspondant à un signal de l'ordre de 100 mV.

$B_2H_6$: 3,8 ppm correspondant à un signal de l'ordre de 60 mV.

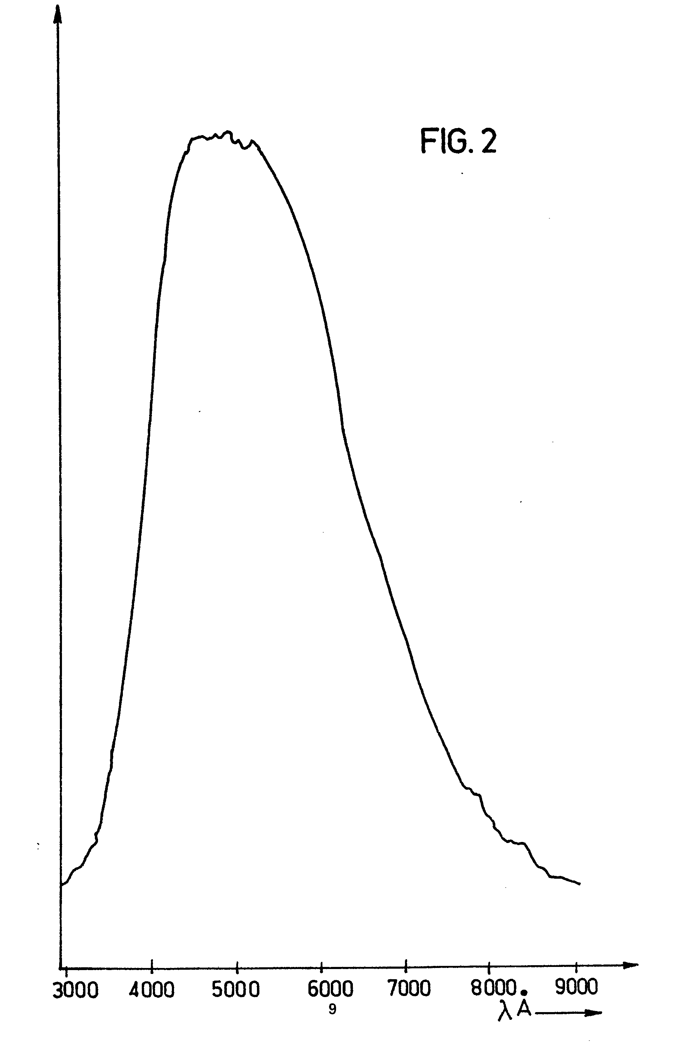

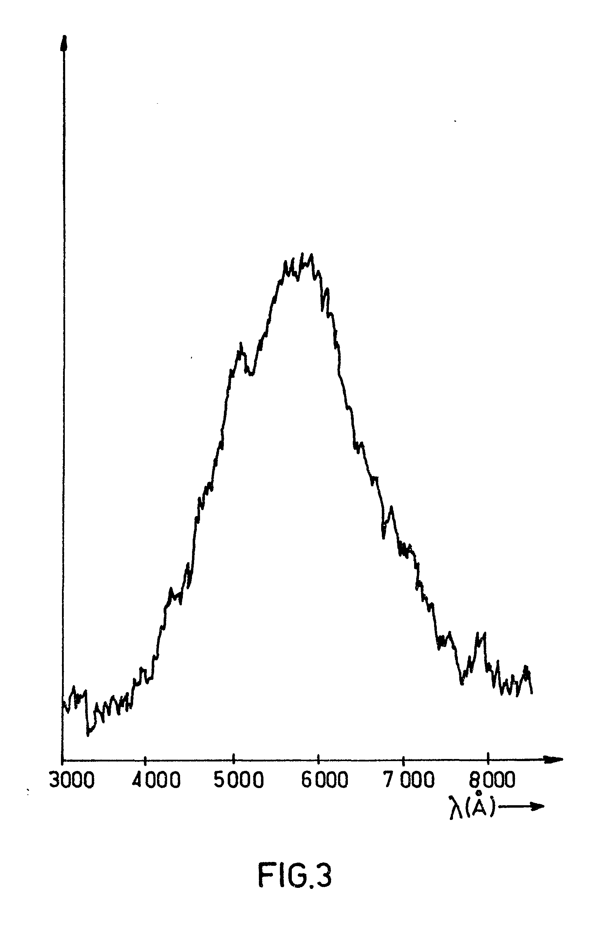

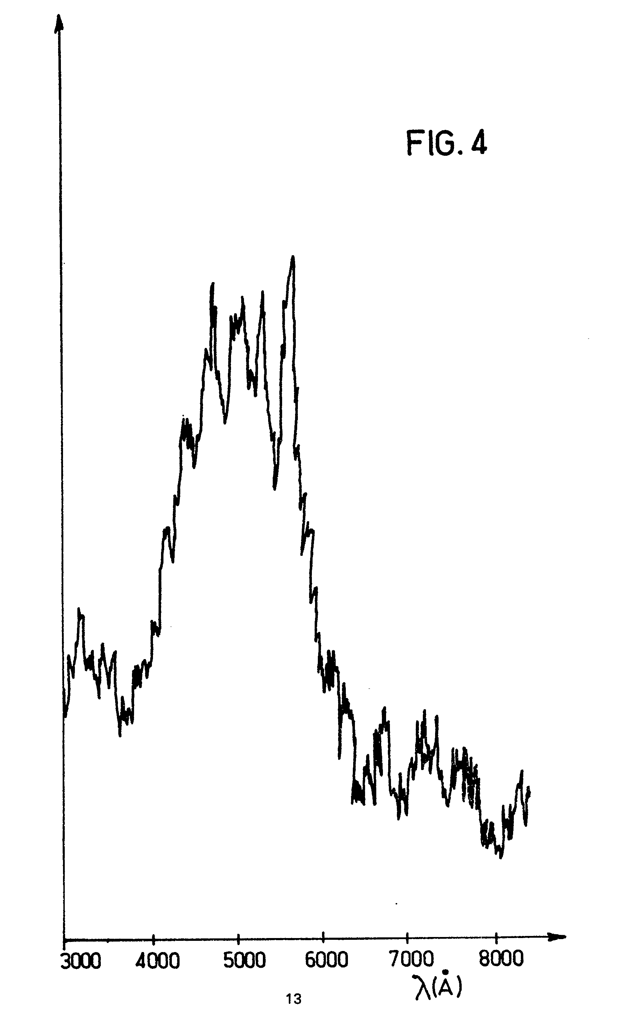

La fig. 2 montre le spectre d'émission de l'arsine, la fig. 3 celui de la phosphine et la fig. 4 celui du diborane.

**Revendications**

1. Procédé d'analyse directe et continue de traces d'hydrures gazeux choisis parmi l'arsine, la phosphine, le silane et le diborane, seuls ou en mélange, à très basses teneurs dans un gaz vecteur par émission chimiluminescente desdits hydrures en présence d'ozone, caractérisé en ce que les spectres émis sont filtrés optiquement de façon à transmettre par filtrage optique les signaux de longueurs d'onde comprises entre 495 et 650 nm et en ce que les signaux optiques transmis sont amplifiés par un tube photomultiplicateur dont la courbe de réponse spectrale est adaptée à la zone de longueurs d'onde précitée.

2. Procédé de détection de chromatographie de traces d'hydrures gazeux choisis parmi l'arsine, la phosphine, le silane et le diborane seuls ou en mélange, jusqu'à de très basses teneurs, caractérisé en ce que dans un premier stade lesdits hydrures gazeux sont séparés par chromatographie en phase gazeuse puis dans un second stade chacun des hydrures est soumis séparément à une émission chimiluminescente en présence d'ozone, le spectre émis étant filtré optiquement de façon à transmettre par filtrage optique les signaux de longueurs d'onde comprises entre 495 et 650 nm, et en ce que les signaux optiques recueillis sont amplifiés par un tube photomultiplicateur dont la courbe de réponse spectrale est adaptée à la zone de longueurs d'onde précitée.

3. Procédé d'analyse directe continue et sélective d'un hydrure gazeux choisi parmi l'arsine, la phosphine, le silane et le diborane seuls ou en mélange, caractérisé par la mise en œuvre du procédé selon la revendication 2.

4. Application du procédé selon l'une des revendications 1 à 3, au dosage sélectif de faibles traces d'hydrures gazeux choisis parmi l'arsine, la phosphine, le silane et le diborane seuls ou en mélange dans une atmosphère permettant une détection de sécurité, et un contrôle de la pollution atmosphérique et une détection de chromatographie.

5. Appareil analyseur et détecteur permettant la mise en œuvre du procédé selon la revendication 1, caractérisé en ce qu'il comprend un ozoneur (16), une chambre de réaction (6) desdits hydrures avec l'ozone, un ensemble de filtres optiques (20) pour transmettre par filtrage les spectres émis entre 495 et 650 nm, un photomultiplicateur (21) dont la courbe de réponse spectrale est adaptée à la zone de longueurs d'onde précitée et des contacts à alarme (24).

6. Appareil analyseur et détecteur selon la revendication 5, caractérisé en ce qu'il comprend en outre une imprimante à alarme (25).

## Patentansprüche

1. Verfahren zur direkten und kontinuierlichen Analyse von Spuren gasförmiger Hydride aus der Gruppe Arsin, Phosphin, Silan und Diboran allein oder im Gemisch mit sehr niedrigen Gehalten in einem Trägergas durch Chemolumineszenzemission dieser Hydride in Gegenwart von Ozon, dadurch gekennzeichnet, dass die emittierten Spektren optisch derart gefiltert werden, dass durch optisches Filtern die Signale mit Wellenlängen zwischen 495 und 650 nm durchgelassen werden und dass die durchgelassenen optischen Signale durch eine Photomultiplikatorröhre verstärkt werden, deren Spektralkennlinie an die genannte Wellenlängenzone angepasst ist.

2. Verfahren zur chromatographischen Ermittlung von Spuren gasförmiger Hydride aus der Gruppe Arsin, Phosphin, Silan und Diboran allein oder im Gemisch bis zu sehr niedrigen Gehalten, dadurch gekennzeichnet, dass in einer ersten Stufe die gasförmigen Hydride durch Chromatographie in der Gasphase getrennt werden und dann in einer zweiten Stufe jedes der Hydride getrennt einer Chemolumineszenzemission in Gegenwart von Ozon unterzogen wird, wobei das emittierte Spektrum derart optisch gefiltert wird, dass durch das optische Filtern die Signale mit Wellenlängen zwischen 495 und 650 nm durchgelassen werden und die aufgefangenen optischen Signale durch eine Photomultiplikatorröhre verstärkt werden, deren Spektralkennlinie an die genannte Wellenlängenzone angepasst ist.

3. Verfahren zur direkten kontinuierlichen und selektiven Analyse eines gasförmigen Hydrids aus der Gruppe Arsin, Phosphin, Silan und Diboran allein oder im Gemisch, dadurch gekennzeichnet, dass das Verfahren nach Anspruch 2 angewendet wird.

4. Verwendung des Verfahrens nach einem der Ansprüche 1 bis 3 zur selektiven Dosierung schwacher Spuren gasförmiger Hydride aus der Gruppe Arsin, Phosphin, Silan und Diboran allein oder im Gemisch in einer Atmosphäre, die eine Sicherheitsermittlung gestattet, und zur Kontrolle der Atmosphärenverunreinigung und zu einer chromatographischen Ermittlung.

5. Analysier- und Ermittlungsvorrichtung, die die Verwendung des Verfahrens nach Anspruch 1 gestattet, dadurch gekennzeichnet, dass sie einen Ozonisator (16), eine Reaktionskammer (6) für die Reaktion der Hydride mit Ozon, einen Satz optischer Filter (20), um durch Filtern die zwischen 495 und 650 nm emittierten Spektren durchzulassen, einen Photomultiplikator (21), dessen Spektralkennlinie an die genannte Wellenlängenzone angepasst ist, und Alarmkontake (24) aufweist.

6. Analysier- und Ermittlungsvorrichtung nach Anspruch 5, dadurch gekennzeichnet, dass sie zusätzlich einen Alarmdrucker (25) aufweist.

## Claims

1. Method for the direct and continuous analysis of traces of gaseous hydrides selected from the group of arsine, phosphine, silane and diborane solely or in a mixture having very low contents in a carrier gas by chemiluminiscence emission of the said hydrides in presence of ozone, characterised in that the emitted spectra are optically filtered so that by optical filtration the signals of wave lengths between 495 and 650 nm are transmitted and that the transmitted optical signals are amplified by a photomultiplier tube the spectral response curve of which is adapted to the cited zone of wave lenghts.

2. Method for chromatographic detection of traces of gaseous hydrides selected from the group consisting of arsine, phosphine, silane and diborane solely or in a mixture up to very low contents, characterised in that in a first step the said gaseous hydrides are separated by chromatography in gaseous phase and then in a second step each of the hydrides is subjected separately to a chemiluminescence emission in presence of ozone, the emitted spectra being optically filtered so that by optical filtration the signals of wave lengths between 495 and 650 nm are transmitted and the received optical signals are amplified by a photomultiplier tube the spectral response curve of which is adapted to the cited zone of wave lengths.

3. Method of direct continuous and selective analysis of a gaseous hydride selected from the group consisting of arsine, phosphine, silane and diborane solely or in a mixture, characterized by the use of the method according to Claim 2.

4. Use of the method according to one of the Claims 1 to 3 for a selective dosage of weak traces of gaseous hydrides selected from the group consisting of arsine, phosphine, silane and diborane solely or in a mixture in an atmosphere permitting a detection of security, and a control of the atmospheric pollution and a detection of chromatography.

5. Analyzing and detecting apparatus permitting the use of the method according to Claim 1, characterized in that it comprises an ozonizer (16), a chamber of reaction (6) of the said hydrides with the ozone, a set of optical filters (20) for transmitting by filtration the emitted spectra between 495 and 650 nm, a photomultiplier (21) the spectral response curve of which is adapted to the cited zone of wave lengths and alarm contacts (24).

6. Analyzing and detecting apparatus according to Claim 5, characterized in that it comprises additionally an alarm printer (25).

**FIG.1**

FIG. 2

FIG.3

FIG. 4

$\lambda(\mathring{A})$

13